# EUROPÄISCHE PATENTSCHRIFT

(11) **EP 3 311 503 B1**
(45) Veröffentlichungstag und Bekanntmachung des Hinweises auf die Patenterteilung: **03.07.2019**
(21) Anmeldenummer: 15750711.2
(22) Anmeldetag: 12.08.2015
(51) Int. Cl.: H04B 3/54, H02J 13/00, H04L 12/40, H04L 25/02

(54) **FELDGERÄT-KOPPELEINRICHTUNG UND SYSTEM**
FIELD DEVICE COUPLING UNIT AND SYSTEM
DISPOSITIF DE COUPLAGE D'APPAREIL DE TERRAIN ET SYSTÈME

(43) Veröffentlichungstag der Anmeldung: 25.04.2018
(73) Patentinhaber: Festo AG & Co. KG, 73734 Esslingen (DE)
(72) Erfinder: WUNDERLICH, Steffen, 72631 Aichtal (DE); BEUEL, Stefan, 72141 Walddorfhäslach (DE)
(74) Vertreter: Patentanwälte Magenbauer & Kollegen Partnerschaft mbB
(86) Internationale Anmeldenummer: PCT/EP2015/068553
(87) Internationale Veröffentlichungsnummer: WO 2017/025140

(56) Entgegenhaltungen:
- EP-A2- 2 530 809
- DE-A1- 19 813 700
- DE-A1-102006 011 595

## Beschreibung

Die Erfindung betrifft eine Feldgerät-Koppeleinrichtung zur Bereitstellung einer Versorgungsspannung für ein Feldgerät und zur Kommunikation mit einer übergeordneten Steuereinrichtung, wobei die Feldgerät-Koppeleinrichtung eine Stromschnittstelle umfasst, die zur Kommunikation mit der Steuereinrichtung ausgebildet ist und die eine erste ansteuerbare Eingangsbürde aufweist, die ausgebildet ist, aus einem Schnittstellenstrom der Stromschnittstelle eine der Versorgungsspannung zugrunde liegende Bürdenspannung bereitzustellen, wobei die Feldgerät-Koppeleinrichtung ferner eine Schaltungsanordnung zur Bereitstellung eines an das Steuergerät zu übertragenden Kommunikationssignals umfasst.

Eine Feldgerät-Koppeleinrichtung der vorstehend genannten Art ist aus dem Stand der Technik bekannt und wird dazu verwendet, ein Feldgerät über eine Stromschnittstelle an eine übergeordnete Steuereinrichtung anzubinden.

Die Feldgerät-Koppeleinrichtung erfüllt dabei primär zwei Funktionen. Zum einen dient die Feldgerät-Koppeleinrichtung dazu, basierend auf dem Schnittstellenstrom der Stromschnittstelle eine Versorgungsspannung für das Feldgerät bereitzustellen. Zum anderen ermöglicht es die Feldgerät-Koppeleinrichtung, mit der Steuereinrichtung über die Stromschnittstelle zu kommunizieren.

Um die erste Funktion - also die Bereitstellung einer Versorgungsspannung - zu erfüllen, umfasst die bekannte Feldgerät-Koppeleinrichtung eine ansteuerbare Eingangsbürde, die vorzugsweise seriell in der Stromschnittstelle geschaltet ist und deren Bürdenspannung - also die Spannung, die über der Eingangsbürde abfällt - der Versorgungsspannung zugrunde liegt; d.h. dass sie als Versorgungsspannung oder als Grundlage für die Versorgungsspannung dient. Die ansteuerbare Eingangsbürde soll dabei insbesondere sicherstellen, dass die Bürdenspannung in einem bestimmten Spannungsbereich bleibt, so dass sie als Versorgungsspannung bzw. als Grundlage für die Versorgungsspannung dienen kann. Je nach Auslegung der ansteuerbaren Eingangsbürde kann diese dabei auch bestimmte Vorgaben für den Explosionsschutz erfüllen, zum Beispiel, indem der Eingangsbürde zugehörige Ströme und/oder Spannungen soweit begrenzt werden, dass eine Mindestzündenergie eines explosiven Gemisches nicht erreicht wird.

Wie vorstehend erwähnt, besteht die zweite Funktion der Feldgerät-Koppelanordnung darin, über die Stromschnittstelle eine Kommunikation zwischen dem Feldgerät und der übergeordneten Steuereinrichtung zu ermöglichen. In diesem Zusammenhang sei zunächst das Grundprinzip der Kommunikation erläutert. Konventionell wurde zur Kommunikation über eine Stromschnittstelle das zu übertragende Kommunikationssignal auf den Strompegel des Schnittstellenstroms abgebildet. Da auf diese Weise jedoch nur sehr geringe Daten-Übertragungsraten erreicht werden können, wurde ein Übertragungsverfahren entwickelt, bei dem der Schnittstellenstrom mit einem frequenzmodulierten Stromsignal überlagert wird, welches die zu übertragende Information enthält. Beispielsweise basiert das HART-Protokoll (Highway Addressable Remote Transducer) auf einem solchen Übertragungsverfahren. Hierbei werden gemäß dem Prinzip der Frequenzumtastung verschiedene Sendesymbole auf verschiedene Frequenzen abgebildet, die das Stromsignal in der Zeitrichtung sequentiell annimmt. Die Frequenzen liegen dabei außerhalb des normalen Spektrums des Schnittstellenstroms, so dass das Stromsignal von Änderungen des Schnittstellenstroms nicht gestört wird.

Um nun dieses Stromsignal dem Schnittstellenstrom zu überlagern, sind bei konventionellen Feldgerät-Koppeleinrichtungen spezielle Überlagerungsschaltungen vorgesehen. Diese Überlagerungsschaltungen erhöhen den Schaltungsaufwand der Feldgerät-Koppeleinrichtung, weswegen diese schwieriger herstellbar, komplexer und fehleranfälliger ist.

Es ist eine Aufgabe der Erfindung, bei einer Feldgerät-Koppeleinrichtung der eingangs erwähnten Art eine Überlagerung des Schnittstellenstroms mit dem Stromsignal zu erzielen und dabei den erforderlichen Schaltungsaufwand zu minimieren.

Die Aufgabe wird für eine Feldgerät-Koppeleinrichtung der vorgenannten Art anhand der im Kennzeichen des Anspruchs 1 definierten Merkmale erzielt. Erfindungsgemäß ist die Schaltungsanordnung - also die Einheit, die das zu übertragende Kommunikationssignal bereitstellt - ausgebildet, die erste ansteuerbare Eingangsbürde gemäß dem Kommunikationssignal anzusteuern, um so den Schnittstellestrom mit einem dem Kommunikationssignal entsprechenden Stromsignal zu überlagern.

Erfindungsgemäß wird demnach die erste ansteuerbare Eingangsbürde, die konventionell dazu dient, dem Feldgerät eine Spannung bereitzustellen, nun auch dazu verwendet, ein dem Kommunikationssignal entsprechendes Stromsignal auf den Schnittstellenstrom aufzuprägen.

Folglich wird eine bereits vorhandene und eigentlich für eine andere Funktion vorgesehene Einrichtung - nämlich die erste ansteuerbare Eingangsbürde - in vorteilhafter Weise nun auch dazu verwendet, den Schnittstellenstrom mit dem Stromsignal zu überlagern.

Eine separate Überlagerungsschaltung, wie sie im Stand der Technik eingesetzt wird, ist daher gemäß der vorliegenden Erfindung nicht erforderlich. Somit wird der Vorteil eines minimierten Schaltungsaufwands erzielt und die vorstehend genannte Aufgabe gelöst.

Bei der ersten ansteuerbaren Eingangsbürde handelt es sich um ein Bauteil, über welchem eine Bürdenspannung abgegriffen werden kann. Insbesondere handelt es sich bei der ansteuerbaren Eingangsbürde um ein Bauteil, welches gemäß einer Ansteuerung mit einem elektrischen Ansteuersignal, insbesondere einem elektrischen Strom oder einer elektrischen Spannung, seine Strom-/Spannungskennlinie ändert, so dass in Abhängigkeit dieser Ansteuerung die über dem Bauteil abfallende Spannung variiert werden kann.

Durch die Ansteuerung der ersten ansteuerbaren Eingangsbürde wird folglich die über der Eingangsbürde abfallende Bürdenspannung variiert. Dies wiederum verursacht eine Änderung des durch die Stromschnittstelle fließenden Schnittstellenstroms. Diese Änderung kann auch als ein den Schnittstellenstrom überlagerndes Stromsignal betrachtet werden. Im Vergleich zu dem sich nur langsam verändernden Schnittstellenstrom, der deshalb auch als DC- bzw. Gleichstromsignal angesehen werden kann, verhält sich das Stromsignal dabei wie eine überlagerte AC-Komponente.

Zweckmäßigerweise umfasst die erste ansteuerbare Eingangsbürde drei Anschlüsse, wobei ein erster und ein zweiter Anschluss seriell mit der Stromschnittstelle verbunden sind, und über eine Ansteuerung des dritten Anschlusses die Strom-/Spannungskennlinie zwischen dem ersten und dem zweiten Anschluss geändert werden kann. Der dritte Anschluss ist beispielsweise ein Referenzeingang.

Wie nachstehend im Detail erläutert, handelt es sich gemäß einer bevorzugten Ausgestaltung der Erfindung bei der ersten ansteuerbaren Eingangsbürde um einen Shunt-Spannungsregler.

Die Feldgerät-Koppeleinrichtung kann als Teil eines Feldgeräts oder als eigenständige Einheit in der Art eines Moduls ausgebildet sein. Im erstgenannten Fall ist die Feldgerät-Koppeleinrichtung beispielsweise integral mit einem oder mehreren weiteren Schaltungsabschnitten des Feldgeräts verbaut. Vorzugsweise kann die Feldgerät-Koppeleinrichtung dabei auf derselben Leiterplatte wie ein oder mehrere weitere Schaltungsabschnitte des Feldgeräts realisiert sein. Alternativ dazu kann die Feldgerät-Koppeleinrichtung auch als eigenständige Einheit ausgebildet sein, die dann vorzugsweise über eine Schnittstelle mit dem Feldgerät verbunden und bei Bedarf ausgetauscht werden kann.

Die übergeordnete Steuereinrichtung ist vorzugsweise eine Steuereinrichtung aus der Leitebene, die über die Stromschnittstelle zweckmäßigerweise Zustandsdaten und/oder Messwerte von dem Feldgerät bzw. der Feldgerät-Koppeleinrichtung empfängt, und vorzugsweise unter Berücksichtigung der Zustandsdaten und/oder der Messwerte Steuerbefehle an das Feldgerät bzw. die Feldgerät-Koppeleinrichtung sendet.

Bei dem Feldgerät kann es sich grundsätzlich um jedes Feldgerät handeln, das mittels einer Feldgerät-Koppeleinrichtung der eingangs erwähnten Art über eine Stromschnittstelle kommuniziert und von dieser mit Energie versorgt wird. Beispielsweise kann das Feldgerät ein Steuerkopf/Positioner sein, der über einen elektrischen oder pneumatischen Antrieb die Ventilgliedstellung eines Ventils bestimmt. Der Positioner wird dabei über die Stromschnittstelle mit Energie versorgt und überträgt ferner über diese Stromschnittstelle ein Kommunikationssignal, das beispielsweise die aktuelle Stellung des Ventils angibt. Der Positioner ist vorzugsweise ein 2-Leiter-Positioner.

Die Stromschnittstelle basiert vorzugsweise auf einer analogen Stromschnittstelle, wie beispielsweise auf der bekannten 4-20 mA Stromschnittstelle, so dass der Schnittstellenstrom Pegel zwischen 4 und 20 mA annehmen kann. Wie nachstehend erläutert wird, kann der Pegel des Schnittstellenstroms auch auf einen bestimmten Wert festgelegt werden, so dass die Kommunikation ausschließlich über das überlagerte Stromsignal erfolgt.

Das Stromsignal und das Kommunikationssignal sind vorzugsweise FSK- bzw. Frequenzumtastungssignale. Das Stromsignal ist dabei insbesondere mit dem HART-Protokoll kompatibel.

Die Schaltungsanordnung, die das Kommunikationssignal bereitstellt und die erste ansteuerbare Eingangsbürde entsprechend ansteuert, ist vorzugsweise als integrierte Schaltung und/oder aus diskreten Bauelementen aufgebaut. Zweckmäßigerweise umfasst die Schaltungsanordnung wenigstens einen Mikrocontroller, einen FPGA und/oder einen ASIC (Application Specific Integrated Circuit).

Vorteilhafte Weiterbildungen der Erfindung sind in den Unteransprüchen definiert.

Gemäß einer ersten Ausgestaltung ist vorgesehen, dass die erste ansteuerbare Eingangsbürde einen Spannungsregler, vorzugsweise einen Shunt-Spannungsregler, umfasst und die Schaltungsanordnung ausgebildet ist, den Spannungsregler gemäß dem Kommunikationssignal anzusteuern.

Wie vorstehend bereits erwähnt, umfasst die erste ansteuerbare Eingangsbürde vorzugsweise einen Spannungsregler bzw. ist als ein solcher ausgebildet. Der Spannungsregler ist dabei eingerichtet, aus dem Schnittstellenstrom die Bürdenspannung zu erzeugen. Insbesondere ist der Spannungsregler eingerichtet, unabhängig von dem Schnittstellenstrom die Bürdenspannung in einem bestimmten Spannungsbereich bzw. auf einem bestimmten Spannungswert zu halten.

Der Spannungsregler umfasst insbesondere einen Referenzeingang, über welchen die Bürdenspannung beeinflusst werden kann. Das Kommunikationssignal wird vorzugsweise in diesen Referenzeingang eingekoppelt.

Vorzugsweise handelt es sich bei dem Spannungsregler um einen Shunt-Spannungsregler bzw. um einen Shunt-Spannungsregulator. Beispielsweise kann als Spannungsregler das Bauteil Zetex ZHT431 des Unternehmens Diodes Incorporated eingesetzt werden bzw. ein Bauteil, das die gleiche Funktion wie dieses Bauteil aufweist. Der Spannungsregler ist zum Beispiel als "Adjustable Precision Zener Shunt Regulator" ausgebildet - also als einstellbarer Präzisions-Zener-Shunt-Regler.

In weiterer Ausgestaltung ist vorgesehen, dass die erste ansteuerbare Eingangsbürde ausgebildet ist, die Bürdenspannung auf einen eingestellten Spannungswert zu begrenzen.

Vorzugsweise übernimmt die erste ansteuerbare Eingangsbürde dabei die Funktion einer Zener-Diode - die über der ersten ansteuerbaren Eingangsbürde abfallende Bürdenspannung wird unabhängig von dem Schnittstellenstrom unter bzw. auf einen bestimmten Spannungswert begrenzt.

Zweckmäßigerweise kann dieser Spannungswert eingestellt werden, indem die erste ansteuerbare Eingangsbürde in einer bestimmten Weise beschaltet wird. Zum Beispiel kann der Spannungswert durch die Beschaltung mit zwei Widerständen eingestellt werden, die die Bürdenspannung teilen und die geteilte Bürdenspannung einem Referenzeingang der ersten ansteuerbaren Eingangsbürde zuführen. Die beiden Widerstände sind dabei als Spannungsteiler geschaltet. Durch die Wahl der beiden Widerstände kann so der Spannungswert eingestellt werden, auf bzw. unter den die Bürdenspannung begrenzt wird.

Zweckmäßigerweise ist der Spannungswert derart eingestellt, dass eine Mindestzündenergie eines explosiven Gemisches nicht erreicht wird, so dass bestimmte Explosionsschutzvorgaben erfüllt werden.

In weiterer Ausgestaltung ist vorgesehen, dass die Stromschnittstelle einen ersten und einen zweiten Leitungsanschluss aufweist und die erste ansteuerbare Eingangsbürde seriell zwischen den beiden Leitungsanschlüssen geschaltet ist.

In weiterer Ausgestaltung ist vorgesehen, dass die erste ansteuerbare Eingangsbürde einen ersten Referenzeingang aufweist und ausgebildet ist, die Bürdenspannung gemäß einer Änderung der am ersten Referenzeingang anliegenden Spannung zu ändern, und dass die Schaltungsanordnung ausgebildet ist, dem ersten Referenzeingang eine erste Referenzspannung zuzuführen und die erste Referenzspannung mit dem Kommunikationssignal zu überlagern.

Wie bereits vorstehend erwähnt, weist die erste ansteuerbare Eingangsbürde vorzugsweise einen ersten Referenzeingang auf. Über diesen Referenzeingang kann die Bürdenspannung beeinflusst werden. Grundsätzlich liegt an dem ersten Referenzeingang eine erste Referenzspannung an, die beispielsweise von den vorstehend erwähnten, als Spannungsteiler geschalteten Widerständen bereitgestellt wird. Diese erste Referenzspannung wird, vorzugsweise mittels kapazitiver Kopplung, mit dem Kommunikationssignal überlagert. Aufgrund des Zusammenhangs zwischen der am Referenzeingang der ersten ansteuerbaren Eingangsbürde anliegenden Spannung und der Bürdenspannung wird die Bürdenspannung gemäß dem Kommunikationssignal variiert, wodurch wiederum eine entsprechende Änderung des Schnittstellenstroms hervorgerufen wird. Diese Änderung des Schnittstellenstroms stellt das Stromsignal dar, welches schließlich an der übergeordneten Steuereinrichtung empfangen werden kann.

In weiterer Ausgestaltung ist vorgesehen, dass parallel zu der ersten ansteuerbaren Eingangsbürde mindestens eine zweite ansteuerbare Eingangsbürde geschaltet ist, die einen zweiten Referenzeingang aufweist, an dem eine zweite Referenzspannung anliegt, und dass die Referenzeingänge der ansteuerbaren Eingangsbürden derart beschaltet sind, dass die erste Referenzspannung dauerhaft unter der zweiten Referenzspannung liegt.

Die zweite ansteuerbare Eingangsbürde ist insbesondere aus Redundanzgründen vorgesehen, um so selbst bei Ausfall der ersten ansteuerbaren Eingangsbürde trotzdem noch die vorstehend beschriebene Spannungsbegrenzung zu erzielen. Vorzugsweise ist die zweite ansteuerbare Eingangsbürde in derselben Weise ausgebildet wie die erste ansteuerbare Eingangsbürde, dabei jedoch anders beschaltet. So ist die zweite ansteuerbare Eingangsbürde zwar grundsätzlich ansteuerbar ausgebildet, im Gegensatz zur ersten ansteuerbaren Eingangsbürde jedoch nicht zwingend ansteuerbar beschaltet; insbesondere muss kein Ansteuerpfad zwischen der Schaltungsanordnung und dem zweiten Referenzeingang vorgesehen sein.

Bei der beschriebenen Parallelschaltung der Eingangsbürden kann das Problem auftreten, dass die zweite Eingangsbürde die über beide Eingangsbürden abfallende Bürdenspannung bestimmt, so dass die erste ansteuerbare Eingangsbürde nicht in der Lage ist, die vorstehend erläuterte Änderung der Bürdenspannung zur Aufprägung des Stromsignals auf den Schnittstellenstrom zu erzielen.

Zur Lösung dieses Problems sind die Referenzeingänge der beiden Eingangsbürden derart beschaltet, dass die erste Referenzspannung dauerhaft unter der zweiten Referenzspannung liegt. Ist dies der Fall, so bestimmt stets die Eingangsbürde mit der niedrigeren Referenzspannung - und daraus resultierenden niedrigeren Bürdenspannung - die Änderung der Bürdenspannung und die Änderung des Schnittstellenstroms. Im vorliegenden Fall ist dies die erste ansteuerbare Eingangsbürde, der es somit ermöglicht wird, in der beschriebenen Weise den Schnittstellenstrom mit dem Stromsignal zu überlagern.

Die Referenzspannungen können dabei beispielsweise über Spannungsteiler bereitgestellt werden und der Spannungsteiler, der die zweite Referenzspannung bereitstellt, derart im Verhältnis zu dem anderen Spannungsteiler ausgelegt sein, dass die erste Referenzspannung unter der zweiten Referenzspannung liegt. Vorzugsweise sind die Eingangsbürden dabei derart beschaltet, dass auch die Summe aus erster Referenzspannung und überlagertem Kommunikationssignal niedriger als die zweite Referenzspannung ist.

In der beschriebenen Ausgestaltung können auch mehrere zweite ansteuerbare Eingangsbürden vorhanden sein. Die Eingangsbürden sind dann derart beschaltet, dass die Referenzspannung der ersten ansteuerbaren Eingangsbürde tiefer ist als jede Referenzspannung der zweiten ansteuerbaren Eingangsbürden.

In weiterer Ausgestaltung ist vorgesehen, dass parallel zu der ersten ansteuerbaren Eingangsbürde mindestens eine zweite ansteuerbare Eingangsbürde geschaltet ist, die einen zweiten Referenzeingang aufweist, an dem eine zweite Referenzspannung anliegt, und dass die Schaltungsanordnung ausgebildet ist, durch Betätigung eines Schalters die erste Referenzspannung unter die zweiten Referenzspannung zu setzen und/oder ausgebildet ist, durch Betätigung eines Schalters die zweite Referenzspannung über die erste Referenzspannung zu setzten.

Diese Ausgestaltung löst das vorstehend genannte Problem - nämlich dass bei parallel geschalteten Eingangsbürden die erste ansteuerbare Eingangsbürde unter Umständen nicht die Bürdenspannung bestimmt - auf eine alternative Weise.

Anstelle der vorgenannten Beschaltung zur dauerhaften Herabsetzung der ersten Referenzspannung ist hier mindestens ein Schalter vorgesehen, mittels welchem die erste Referenzspannung unter die zweite Referenzspannung, oder die zweite Referenzspannung über die erste Referenzspannung gesetzt werden kann.

Der Schalter wird durch die Schaltungsanordnung betätigt. Insbesondere ist die Schaltungsanordnung dabei derart ausgebildet, dass die Betätigung nur zeitweise stattfindet, und zwar vorzugsweise nur dann, wenn die erste ansteuerbare Eingangsbürde zur Übertragung des Kommunikationssignals verwendet werden soll.

In weiterer Ausgestaltung ist vorgesehen, dass die Schaltungsanordnung einen Schaltungszweig umfasst, der den Schalter und vorzugsweise einen Widerstand aufweist, wobei der Schaltungszweig vorzugsweise zwischen einem Masseknoten und dem ersten oder dem zweiten Referenzeingang geschaltet ist.

Zweckmäßigerweise wird dabei mittels des Schalters der Widerstand parallel zu einem Widerstand eines der ersten oder zweiten Eingangsbürde zugehörigen Spannungsteilers zugeschaltet oder eine solche Zuschaltung getrennt. So kann durch Betätigung des Schalters das Teilungsverhältnis des der ersten oder der zweiten ansteuerbaren Eingangsbürde zugehörigen Spannungsteilers selektiv geändert werden, und damit die jeweilige Referenzspannung herab- oder hochgesetzt werden.

In weiterer Ausgestaltung ist vorgesehen, dass die Schaltungsanordnung eine Modemeinrichtung aufweist, die ausgebildet ist, das Kommunikationssignal an einem Ausgangsanschluss bereitzustellen, sowie einen zwischen dem Ausgangsanschluss und dem ersten Referenzeingang geschalteten Kondensator aufweist und ausgebildet ist, das an dem Ausgangsanschluss bereitgestellte Kommunikationssignal über den Kondensator in den ersten Referenzeingang einzukoppeln.

In weiterer Ausgestaltung ist vorgesehen, dass zwischen dem Ausgangsanschluss der Modemeinrichtung und dem ersten Referenzeingang eine Spannungsteileranordnung vorgesehen ist, die ausgebildet ist, die Amplitude des der ersten Referenzspannung zu überlagernden Kommunikationssignals um einen vorbestimmten Faktor zu skalieren.

Damit das Stromsignal an der übergeordneten Steuereinrichtung auch als solches leicht erkannt werden kann, ist es vorteilhaft, wenn es eine bestimmte Amplitude aufweist. Nun ist es allerdings möglich, dass die erste ansteuerbare Eingangsbürde, die eigentlich zum Zwecke der Spannungsversorgung und nicht zur Ausprägung des Stromsignals vorgesehen ist, von sich aus nicht dazu ausgebildet ist, das Stromsignal mit einem von der übergeordneten Steuereinrichtung erwarteten Pegel auf die Stromschnittstelle aufzuprägen.

Gemäß der vorliegenden Ausgestaltung wird dieses Problem derart gelöst, dass bereits das der ersten Referenzspannung zu überlagernde Kommunikationssignal entsprechend skaliert wird, so dass die über die Änderung der Bürdenspannung hervorgerufene Änderung des Schnittstellenstroms - also das Stromsignal - die von der übergeordneten Steuereinrichtung erwartete Amplitude aufweist. Zu diesem Zweck ist gemäß der vorliegenden Ausgestaltung eine entsprechende Spannungsteileranordnung vorgesehen.

In weiterer Ausgestaltung ist vorgesehen, dass die Spannungsteileranordnung ferner dazu dient, die erste Referenzspannung bereitzustellen, wobei die Spannungsteileranordnung vorzugsweise zwischen einem ersten Anschlusspunkt der ersten ansteuerbaren Eingangsbürde und einem Masseknoten geschaltet ist.

Wie bereits vorstehend erwähnt, kann die erste Referenzspannung mittels eines Spannungsteilers bereitgestellt werden. In vorteilhafter Weise bildet dieser Spannungsteiler nun Teil der vorstehend erwähnten Spannungsteileranordnung, die dazu dient, die Amplitude des Kommunikationssignals um einen vorbestimmten Faktor zu skalieren. Die Spannungsteileranordnung wird somit in vorteilhafter Weise für zwei verschiedene Zwecke eingesetzt.

In weiterer Ausgestaltung ist vorgesehen, dass die Feldgerät-Koppeleinrichtung ausgebildet ist, die Schaltungsanordnung basierend auf der Bürdenspannung und/oder der Versorgungsspannung zu betreiben.

Dementsprechend dient der von der Stromschnittstelle bereitgestellte Schnittstellenstrom und die daraus gewonnenen Bürdenspannung der Energieversorgung der Schaltungsanordnung. Die Schaltungsanordnung kann direkt mit der Bürdenspannung betrieben werden, oder, alternativ dazu, mit einer aus der Bürdenspannung gewonnenen Versorgungsspannung. Beispielsweise kann zu diesem Zweck zwischen Bürdenspannung und Versorgungsspannung ein DC/DC-Wandler vorgesehen sein.

In weiterer Ausgestaltung ist vorgesehen, dass die Stromschnittstelle eine 4-20mA-Stromschnittstelle ist. Vorzugsweise handelt es sich um eine 4-20mA Current-Loop-Schnittstelle.

In weiterer Ausgestaltung ist vorgesehen, dass die Feldgerät-Koppeleinrichtung ausgebildet ist, mit der Steuereinrichtung über die Stromschnittstelle gemäß dem HART-Protokoll zu kommunizieren, wobei vorzugsweise die Schaltungsanordnung ausgebildet ist, das Kommunikationssignal derart bereitzustellen, dass das den Schnittstellenstrom überlagernde Stromsignal mit dem HART-Protokoll kompatibel ist.

Insbesondere ist dabei die Schaltungsanordnung derart ausgebildet, dass das Kommunikationssignal - und dementsprechend auch das Stromsignal - als ein mit dem HART-Protokoll kompatibles FSK- bzw. Frequenzumtastungssignal erzeugt und die erste ansteuerbare Eingangsbürde entsprechend angesteuert wird. Zweckmäßigerweise nimmt das Stromsignal gemäß der zu übertragenden Information dabei eine Frequenz von 1200 Hz oder 2200 Hz an bzw. wechselt zwischen diesen beiden Frequenzen. Vorzugsweise beträgt die Peak-to-Peak bzw. der Spitze-Tal-Wert der Stromstärke des Stromsignals 1 mA.

In weiterer Ausgestaltung wird ein System aus wenigstens einer ersten und einer zweiten Feldgerät-Koppeleinrichtung bereitgestellt. Die erste und zweite Feldgerät-Koppeleinrichtung sind dabei gemäß einer der vorstehend beschriebenen Feldgerät-Koppeleinrichtungen ausgebildet. Die Stromschnittstellen der beiden Feldgerät-Koppeleinrichtungen sind parallel miteinander verbunden und die Schaltungsanordnung wenigstens einer der Feldgerät-Koppeleinrichtungen ist ausgebildet, zumindest während einer Bereitstellung des Kommunikationssignals an der ersten Feldgerät-Koppeleinrichtung eine erste Referenzspannung, die an einem Referenzeingang der ersten ansteuerbaren Eingangsbürde der ersten Feldgerät-Koppeleinrichtung anliegt, durch Betätigung eines Schalters unter eine erste Referenzspannung zu setzten, die an einem ersten Referenzeingang der ersten ansteuerbaren Eingangsbürde der zweiten Feldgerät-Koppeleinrichtung anliegt, oder ausgebildet zumindest während der Bereitstellung des Kommunikationssignals an der ersten Feldgerät-Koppeleinrichtung die erste Referenzspannung der zweiten Feldgerät-Koppeleinrichtung durch Betätigung eines Schalters über die erste Referenzspannung der ersten Feldgerät-Koppeleinrichtung zu setzen.

Gemäß dieser Ausgestaltung sind zwei Feldgerät-Koppeleinrichtungen bzw. deren Stromschnittstellen parallel geschaltet und können somit mit einer einzigen Stromschnittstelle der übergeordneten Steuereinrichtung verbunden und aus dieser gespeist werden. Dabei tritt jedoch das vorstehend bereits beschriebene Problem auf - nämlich dass bei der Parallelschaltung zweier Eingangsbürden jeweils die Eingangsbürde mit der niedrigeren Referenzspannung die über den Eingangsbürden abfallende Bürdenspannung bestimmt. Zur Lösung dieses Problems ist in dieser Ausgestaltung wenigstens eine der beiden Schaltungsanordnungen ausgebildet, über die Betätigung eines Schalters die jeweilige Referenzspannung nach unten zu ziehen, so dass sie unter der Referenzspannung der ersten ansteuerbaren Eingangsbürde der jeweils anderen Feldgerät-Koppeleinrichtung liegt.

Nachstehend werden beispielhafte Ausführungsformen der Erfindung anhand der beigefügten Zeichnung erläutert. Dabei zeigt:
- Figur 1: ein schematisches Blockschaltbild einer ersten Ausführungsform einer Feldgerät-Koppeleinrichtung im Kontext eines mit einer übergeordneten Steuereinrichtung in Verbindung stehenden Feldgeräts;
- Figur 2: ein schematisches Blockschaltbild einer zweiten Ausführungsform einer Feldgerät-Koppeleinrichtung;
- Figur 3: ein schematisches Blockschaltbild einer dritten Ausführungsform einer Feldgerät-Koppeleinrichtung
- Figur 4: ein System aus zwei parallelgeschalteten FeldgerätKoppeleinrichtungen.

In der nachstehenden Figurenbeschreibung werden für funktionsgleiche Komponenten der dargestellten Ausführungsformen jeweils gleiche Bezeichnungen verwendet, wobei auf eine mehrfache Beschreibung funktionsgleicher Komponenten verzichtet wird.

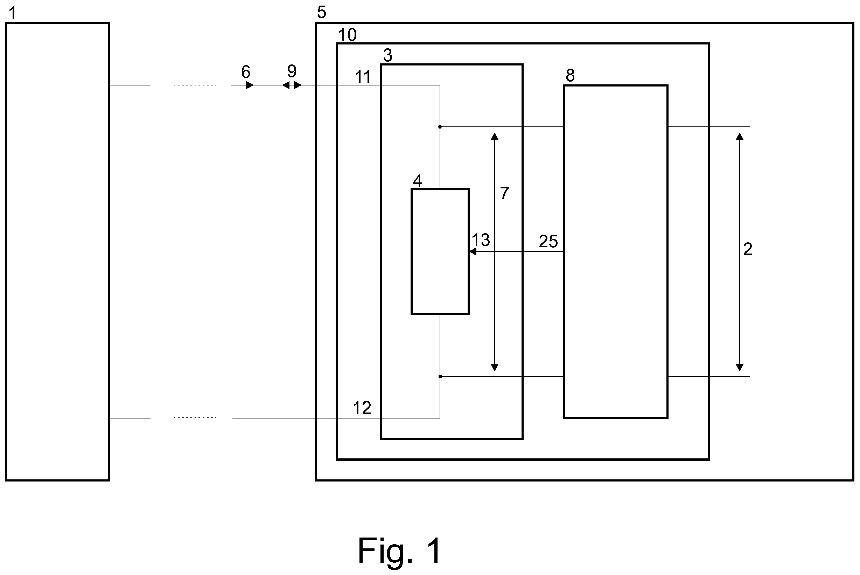

Die Figur 1 zeigt ein schematisches Blockschaltbild einer ersten Ausführungsform einer Feldgerät-Koppeleinrichtung 10 im Kontext eines mit einer übergeordneten Steuereinrichtung 1 in Verbindung stehenden Feldgeräts 5. Das Feldgerät 5 und die übergeordnete Steuereinrichtung 1 sind hier dargestellt, um die Feldgerät-Koppeleinrichtung 10 in einem typischen Anwendungsfall zu zeigen. Die übergeordnete Steuereinrichtung 1 und das Feldgerät 5 sind jedoch keine notwendigen Merkmale der vorliegenden Erfindung, die, wie eingangs erläutert, primär die Feldgerät-Koppeleinrichtung 10 für sich genommen betrifft.

Gemäß der ersten Ausführungsform ist die Feldgerät-Koppeleinrichtung 10 in das Feldgerät 5 eingebaut. Alternativ kann die Feldgerät-Koppeleinrichtung 10 auch baulich getrennt ausgebildet sein und als Modul in das Feldgerät 5 eingesetzt bzw. an dieses angesetzt werden.

Die Feldgerät-Koppeleinrichtung 10 dient zur Bereitstellung einer Versorgungsspannung 2 für das Feldgerät 5 und zur Kommunikation mit der übergeordneten Steuereinrichtung 1 über eine Stromschnittstelle 3. Durch die Stromschnittstelle 3 fließt ein Schnittstellenstrom 6, der vorzugsweise von der übergeordneten Steuereinrichtung 1 bereitgestellt wird.

Die Stromschnittstelle 3 umfasst die beiden Leitungsanschlüsse 11 und 12, zwischen denen die erste ansteuerbare Eingangsbürde 4 vorzugsweise seriell geschaltet ist. Die Leitungsanschlüsse 11 und 12 sind über Leitungen mit einer Stromschnittstelle der übergeordneten Steuereinrichtung 1 verbunden und bilden so zusammen mit der Stromschnittstelle 3 eine Stromschleife.

Die Stromschnittstelle 3 weist eine erste ansteuerbare Eingangsbürde 4 auf, die ausgebildet ist, aus dem Schnittstellenstrom 6 eine der Versorgungsspannung 2 zugrunde liegende Bürdenspannung 7 bereitzustellen. Die Bürdenspannung 7 fällt dabei über der ersten ansteuerbaren Eingangsbürde 4 ab.

Die Feldgerät-Koppeleinrichtung 10 umfasst ferner eine Schaltungsanordnung 8 zur Bereitstellung eines an die Steuereinrichtung 1 zu übertragenden Kommunikationssignals 25. Zur Übertragung des Kommunikationssignals 25 an die Steuereinrichtung 1 wird ein dem Kommunikationssignal 25 entsprechendes Stromsignal 9 dem Schnittstellenstrom 6 überlagert.

Zu diesem Zweck ist die Schaltungsanordnung 8 ausgebildet, die erste ansteuerbare Eingangsbürde 4 gemäß dem Kommunikationssignal 25 anzusteuern, um so den Schnittstellenstrom 6 mit dem dem Kommunikationssignal 25 entsprechenden Stromsignal 9 zu überlagern.

Gegenüber dem Stand der Technik wird in dieser Weise der Vorteil erzielt, dass zur Überlagerung des Schnittstellenstroms 6 mit dem Stromsignal 9 keine zusätzliche Überlagerungseinrichtung vorgesehen werden muss, sondern stattdessen die bereits zur Bereitstellung der Bürdenspannung 7 vorhandene erste ansteuerbare Eingangsbürde 4 eingesetzt wird. So kann unter Beibehaltung der gleichen Funktionalität der Schaltungsaufwand der Feldgerät-Koppeleinrichtung 10 entscheidend reduziert werden, wodurch sich deren Aufbau vereinfacht und die aus diesem Grund günstiger herzustellen und weniger fehleranfällig ist.

Im in der Figur 1 gezeigten Beispiel wird die Bürdenspannung 7 der Schaltungsanordnung 8 zugeführt, sodass diese daraus die Versorgungsspannung 2 erzeugen kann. Alternativ dazu ist es jedoch auch möglich, dass die Versorgungsspannung 2 und die Bürdenspannung 7 identisch sind; also dass die Bürdenspannung 7 direkt als Versorgungsspannung 2 dient. In beiden Fällen liegt die Bürdenspannung 7 der Versorgungsspannung 2 zugrunde.

Die Versorgungsspannung 2 dient beispielsweise als Versorgungsspannung für einen hier nicht gezeigten Aktor des Feldgeräts 5. Alternativ oder zusätzlich dazu kann die Versorgungsspannung 2 bzw. die Bürdenspannung 7 auch als Versorgungsspannung für die Schaltungsanordnung 8 und/oder andere Schaltungsabschnitte bzw. Elektronikkomponenten des Feldgeräts 5 dienen.

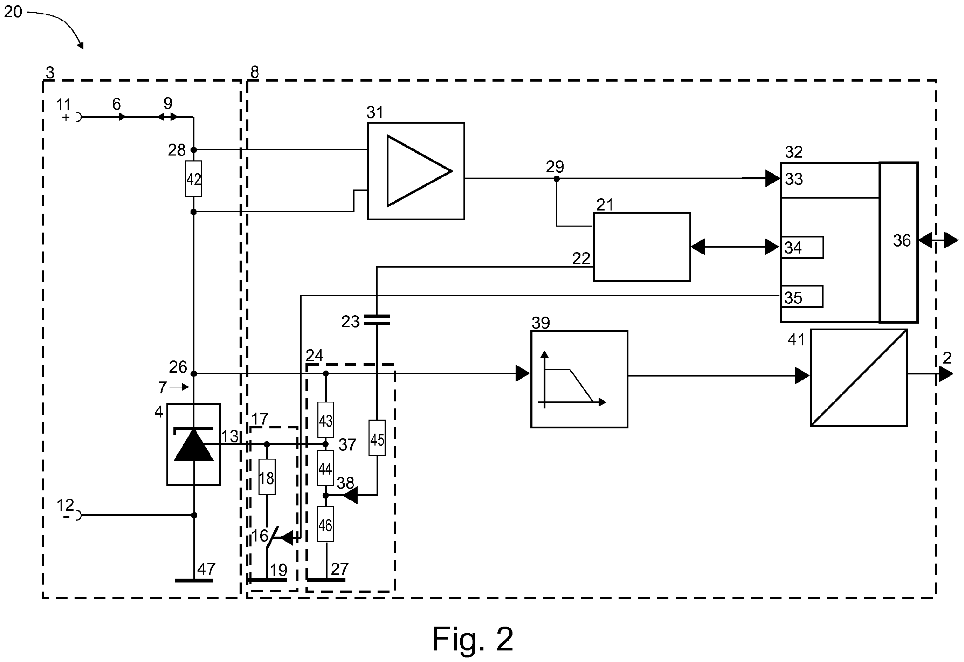

Die Figur 2 zeigt eine zweite Ausführungsform einer Feldgerät-Koppeleinrichtung 20. Die zweite Ausführungsform stellt eine Weiterbildung der ersten Ausführungsform dar, insbesondere in Bezug auf die Stromschnittstelle 3 und die Schaltungsanordnung 8. Die Grundfunktion der zweiten Ausführungsform entspricht der der ersten Ausführungsform und soll an dieser Stelle nicht wiederholt werden.

Gemäß der zweiten Ausführungsform weist die Stromschnittstelle 3 als die erste ansteuerbare Eingangsbürde 4 einen Shunt-Spannungsregler mit drei Anschlusspunkten auf. Der erste Anschlusspunkt 26 ist dabei elektrisch mit dem ersten Leitungsanschluss 11 verbunden, und der zweite Anschlusspunkt ist mit dem zweiten Leitungsanschluss 12 elektrisch verbunden. Der dritte Anschlusspunkt ist als erster Referenzeingang 13 ausgebildet. Die Schaltungsanordnung 8 ist ausgebildet, diesen Referenzeingang 13 gemäß dem Kommunikationssignal 25 anzusteuern.

Gemäß einer möglichen Ausgestaltung der zweiten Ausführungsform dient als Shunt-Spannungsregler das Bauteil ZETEX ZHT431 des Unternehmens Diodes Incorporated. Dabei wird der Anschluss Vz als der erste Anschlusspunkt 26, der Anschluss GND als der zweite Anschlusspunkt, und der Anschluss VREF als der dritte Anschlusspunkt bzw. als der Referenzeingang 13 verwendet.

Die als Shunt-Spannungsregler ausgebildete erste ansteuerbare Eingangsbürde 4 ist dabei insbesondere eingerichtet, die Bürdenspannung 7 auf oder unter einen eingestellten Spannungswert zu begrenzen.

Zum Einstellen dieses Spannungswerts umfasst die Schaltungsanordnung 8 eine Spannungsteileranordnung 24, die im gezeigten Beispiel drei ohmsche Widerstände und zwar einen ersten Widerstand 43, einen zweiten Widerstand 44 und einen dritten Widerstand 46 umfasst. Die drei Widerstände sind in Reihe zwischen dem ersten Anschlusspunkt 26 und einem Masseknoten 27 geschaltet, wobei der erste Widerstand 43 mit dem ersten Anschlusspunkt 26 verbunden ist und der dritte Widerstand 46 mit dem Masseknoten 27 verbunden ist. Vorzugsweise ist der zweite Leitungsanschluss 12 mit einem Masseknoten 47 verbunden, so dass der Masseknoten 27 mit dem zweiten Leitungsanschluss 12 effektiv verbunden bzw. kurzgeschlossen ist. Die Spannungsteileranordnung 24 ist dann parallel zu der ersten ansteuerbaren Eingangsbürde 4 geschaltet. Der erste Widerstand 43 ist mit dem zweiten Widerstand 44 über einen ersten Schaltungsknoten 37 verbunden. Der zweite Widerstand 44 ist mit dem dritten Widerstand 46 über einen zweiten Schaltungsknoten 38 verbunden. Der erste Schaltungsknoten 37 ist ferner mit dem ersten Referenzeingang 13 verbunden, so dass die am ersten Schaltungsknoten 37 anliegende Spannung dem ersten Referenzeingang 13 als die erste Referenzspannung zugeführt wird.

Die Schaltungsanordnung 8 verfügt über eine Modemeinrichtung 21, die an ihrem Ausgangsanschluss 22 das an die Steuereinrichtung 1 zu übertragende Kommunikationssignal 25 bereitstellt. Der Ausgangsanschluss 22 ist über den Kondensator 23 elektrisch an den Referenzeingang 13 gekoppelt. Im gezeigten Beispiel findet die Kopplung über die Spannungsteileranordnung 24 statt, so dass das Kommunikationssignal 25 auf dem Ansteuerpfad zum ersten Referenzeingang 13 derart skaliert wird, dass das aus der Einkopplung des Kommunikationssignals 25 resultierende Stromsignal 9 eine gewünschte Amplitude, vorzugsweise eine mit dem HART-Protokoll kompatible Amplitude, aufweist. Zu diesem Zweck ist der Kondensator 23 mit dem zweiten Schaltungsknoten 38 über einen vierten Widerstand 45 verbunden.

Alternativ zu der vorstehend beschriebenen Anbindung des Ausgangsanschlusses an den Referenzeingang 13 kann der Ausgangsanschluss 22 über den Kondensator 23 auch direkt an den Referenzeingang 13 angekoppelt werden. Die Skalierung des Kommunikationssignals 25 kann dann beispielsweise bereits in der Modemeinrichtung 21 erfolgen.

Die Modemeinrichtung 21 ist vorzugsweise als HART-Modem ausgebildet und eingerichtet, ein mit dem HART-Protokoll kompatibles Kommunikationssignal 25, wie beispielsweise ein FSK-Signal, bereitzustellen. Die Modemeinrichtung 21 kann dabei als eigenständiges Bauteil bzw. Chip ausgebildet sein, oder eine funktionale Einheit eines Mikrocontrollers, FPGAs oder ASICs darstellen.

Die Stromschnittstelle 3 basiert vorzugsweise auf einer analogen Stromschnittstelle, wie beispielsweise auf der bekannten 4-20 mA Stromschnittstelle, so dass der Schnittstellenstrom Pegel zwischen 4 und 20 mA annehmen kann.

Seriell zur ersten ansteuerbaren Eingangsbürde ist ein fünfter Widerstand 42 geschaltet. Vorzugsweise befindet sich der fünfte Widerstand 42 zwischen dem ersten Leitungsanschluss 11 und dem ersten Anschlusspunkt 26. Der fünfte Widerstand 42 ist ein Shunt-Widerstand, der den durch die Stromschnittstelle fließenden Strom in ein Spannungssignal wandelt und dieses einem Instrumentenverstärker 31 zuführt. Der Instrumentenverstärker verstärkt das Spannungssignal und gibt es auf einen dritten Schaltungsknoten 29 der mit einem Eingangsanschluss der Modemeinrichtung 21 verbunden ist. Die Modemeinrichtung 21 verarbeitet das Spannungssignal, indem es beispielsweise eine Demodulation ausführt, und überträgt die aus dem Spannungssignal gewonnene Information an die Prozessoreinrichtung 32. Auf diese Weise können von der übergeordneten Steuereinrichtung 1 an das Feldgerät 5 bzw. die Feldgerät-Koppeleinrichtung 20 gesendete Stromsignale empfangen werden.

An dem Schaltungsknoten 29 ist ferner ein AD-Konverter 33 einer Prozessoreinrichtung 32 angeschlossen. Der AD-Konverter 33 dient insbesondere dazu, den Pegel der an dem Schaltungsknoten 29 anliegenden Spannung zu erfassen, um so den Pegel des Schnittstellenstroms und damit die auf den Pegel des Schnittstellenstroms abgebildete Information zu bestimmen.

Die Prozessoreinrichtung 32 umfasst ferner eine Datenschnittstelle 34, einen Steuerausgang 35 und eine Steuersignalschnittstelle 36. Die Datenschnittstelle 34 ist vorzugsweise als UART-Schnittstelle ausgebildet und dient dazu, die an die übergeordnete Steuereinrichtung 1 zu übertragende Information an die Modemeinrichtung 21 zu übergeben, so dass diese beispielsweise durch Modulation ein entsprechendes Kommunikationssignal 25 erzeugt. Die Datenschnittstelle 34 dient ferner dazu, ein Datensignal von der Modemeinrichtung 21 zu empfangen, das beispielsweise die vorstehend genannte, aus dem Spannungssignal gewonnene Information enthält. Der Steuerausgang 35 ist vorzugsweise als RTS-Ausgang ausgebildet und dient beispielsweise dazu, einen nachstehend beschriebenen Schalter 16 anzusteuern bzw. zu betätigen. Die Steuersignalschnittstelle dient allgemein dazu, Befehle bzw. Daten an andere funktionale Einheit des Feldgeräts 5 zu senden bzw. von diesen zu empfangen.

Im gezeigten Beispiel ist der erste Anschlusspunkt 26 der ersten ansteuerbaren Eingangsbürde 4 bzw. des Shunt-Spannungsreglers mit dem Eingang eines Tiefpasses 39 verbunden. Alternativ zum Tiefpass 39 kann hier auch ein Gyrator eingesetzt werden. Der Tiefpass 39 bzw. Gyrator gibt die DC-Komponente der Bürdenspannung 7 zur Energieversorgung an einen Versorgungspfad weiter und verhindert dabei, dass das Stromsignal 9 ebenfalls in diesen Versorgungspfad abfließt. Beispielsweise ist dem Tiefpass 39 bzw. Gyrator ein DC/DC-Wandler nachgeschaltet, und der Tiefpass 39 bzw. Gyrator ist ausgebildet, nur den DC-Anteil der Bürdenspannung 7 bzw. des Schnittstellenstroms 6 an den DC/DC-Wandler 41 weiterzuleiten, ohne dass eine niedrige Wechselspannungs-Impedanz seines Eingangs das Stromsignal 9 störend beeinflussen kann. Der Tiefpass bzw. Gyrator ist vorzugsweise als Filter 2. Ordnung ausgelegt.

Der DC/DC-Wandler 41 ist vorzugsweise als Buck-/Step-Down-Wandler ausgelegt und dient zur Spannungsaufbereitung der Bürdenspannung 7, damit nachgeschaltete Elektronikanordnungen stabil versorgt werden können. Der DC/DC-Wandler 41 ist zudem ausgebildet, ein definiertes Ein- und Ausschalten seiner Ausgangsspannung in einem bestimmten Spannungsbereich seines Ladekondensators zu sichern.

Der erste Referenzeingang 13 bzw. der erste Schaltungsknoten 37 ist ferner mit einem Spannungszweig 17 verbunden. Der Spannungszweig 17 umfasst einen sechsten Widerstand 18 und einen Schalter 16, die in Reihe zueinander geschaltet sind. Der Spannungszweig 17 ist zudem mit einem Masseknoten 19 verbunden. Der Schalter 16 wird über den Steuerausgang 35 der Prozessoreinrichtung 32 betätigt. Ist der Schalter 16 leitend geschaltet, so wird die über der Spannungsteileranordnung 24 anliegende Spannung zwischen dem ersten Widerstand 43 und dem resultierenden Widerstand der zusammengeschalteten Widerstände 44, 46 und 18 aufgeteilt. Da durch die Zuschaltung des sechsten Widerstands 18 dieser resultierende Widerstand verringert wird, verringert sich die an dem ersten Referenzeingang anliegende erste Referenzspannung. Der Schaltungszweig 17 dient somit der selektiven Herabsetzung der ersten Referenzspannung. Vorzugsweise ist die Prozessoreinrichtung 33 dabei ausgebildet, eine Herabsetzung der Referenzspannung zumindest dann zu bewirken, wenn die Modemeinrichtung 21 das Kommunikationssignal 25 ausgibt.

Der Spannungszweig 17 wird in der zweiten Ausführungsform nicht benötigt und kann auch weggelassen werden.

Die die oben beschriebenen, mit den Bezugszeichen 17, 21, 24, 32, 33, 34, 35, 39, 41, 42 versehenen Elemente bzw. Einrichtungen sind in der Figur 2 in Kombination gezeigt. Diese Elemente können aber auch einzeln und unabhängig voneinander vorgesehen sein, beispielsweise im Kontext der in der Figur 1 gezeigten Feldgerät-Koppeleinrichtung 10.

Die oben beschriebenen, mit den Bezugszeichen 17, 21, 24, 32, 33, 34, 35, 39, 41, 42 versehenen Elemente bzw. Einrichtungen können jeweils als eigenständige Bauteile ausgebildet sein. Alternativ dazu können diese Elemente bzw. eine Untergruppe dieser Elemente auch als funktionale Einheiten eines einzigen Bauteils, wie beispielsweise einer integrierten Schaltung ausgebildet sein.

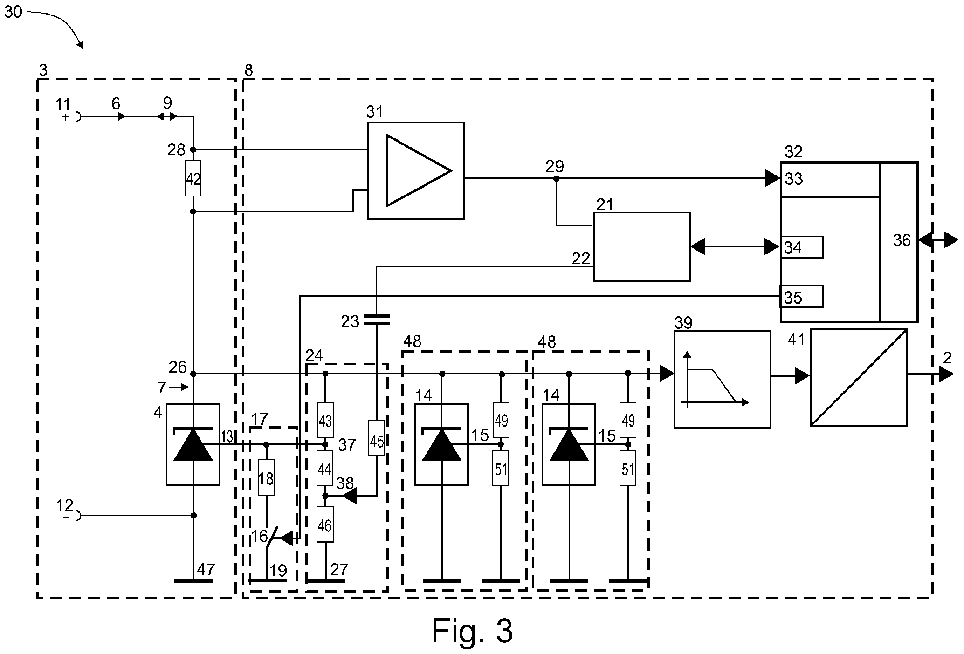

Die Figur 3 zeigt eine dritte Ausführungsform einer Feldgerät-Koppeleinrichtung 30. Die dritte Ausführungsform entspricht im Wesentlichen der zweiten Ausführungsform, weist jedoch zusätzlich noch zwei Eingangsbürdenanordnungen 48 auf, die parallel zu der ersten ansteuerbaren Eingangsbürde 4 geschaltet sind.

Die beiden ansteuerbaren Eingangsbürdenanordnungen 48 sind aus Sicherheitsgründen vorgesehen, um beim Ausfall der ersten ansteuerbaren Eingangsbürde 4 trotzdem noch eine Begrenzung der Bürdenspannung 7 gewährleisten zu können. Die Eingangsbürdenanordnungen 48 umfassen jeweils eine zweite ansteuerbare Eingangsbürde 14. Die zweite ansteuerbare Eingangsbürde 14 ist vorzugsweise in derselben Weise ausgebildet wie die erste ansteuerbare Eingangsbürde 4. Insbesondere handelt es sich bei der zweiten ansteuerbaren Eingangsbürde 14 ebenfalls um einen Shunt-Spannungsregler, wie beispielsweise den oben genannten ZETEX ZHT431. Die Eingangsbürdenanordnungen 48 umfassen ferner jeweils einen Spannungsteiler. Der Spannungsteiler ist dabei aus den Widerständen 49 und 51 aufgebaut und parallel zu der zweiten ansteuerbaren Eingangsbürde 14 geschaltet. Die zweite ansteuerbare Eingangsbürde 14 weist einen zweiten Referenzeingang 15 auf, an dem die zwischen den Widerständen 49 und 51 abgreifbare Spannung als zweite Referenzspannung anliegt. Bei der beschriebenen Parallelschaltung der Eingangsbürden 4 und 14 kann das Problem auftreten, dass eine der zweiten Eingangsbürden 14 die über die Eingangsbürden 4 und 14 abfallende Bürdenspannung 7 bestimmt, so dass die erste ansteuerbare Eingangsbürde 4 nicht in der Lage ist, die vorstehend erläuterte Änderung der Bürdenspannung 7 zur Aufprägung des Stromsignals 9 auf den Schnittstellenstrom 6 zu erzielen.

Zur Lösung dieses Problems ist der Spannungszweig 17 vorgesehen, über den die am ersten Referenzeingang 13 anliegende erste Referenzspannung unter die an den jeweiligen zweiten Referenzeingängen 15 anliegenden zweiten Referenzspannungen gesetzt werden kann. Zu diesem Zweck sind die Widerstände der Spannungsteileranordnung 24, der Eingangsbürdenanordnungen 48 und des Schaltungszweigs 17 entsprechend dimensioniert. Insbesondere sind diese Widerstände derart dimensioniert, dass auch die Summe aus erster Referenzspannung und überlagertem Kommunikationssignal 25 niedriger als die zweite Referenzspannung ist.

Durch die herabgesetzte erste Referenzspannung wird sichergestellt, dass die Bürdenspannung 7 von der ersten ansteuerbaren Eingangsbürde 4 bestimmt wird, so dass diese in der Lage ist, über eine Veränderung der Bürdenspannung 7 das Stromsignal 9 dem Schnittstellenstrom 6 zu überlagern.

Alternativ zu dem gezeigten Beispiel kann der Schaltungszweig 17 auch jeweils an den zweiten Referenzeingängen der Eingangsbürdenanordnungen 48 vorgesehen sein. In diesem Fall ist die Prozessoreinrichtung 32 derart ausgebildet, dass der Schalter 16 beim Übertragen des Kommunikationssignals 25 geöffnet wird bzw. sperrt, so dass dadurch die zweite Referenzspannung über die erste Referenzspannung angehoben wird.

Als eine weitere Alternative ist es zudem möglich, den Schaltungszweig 17 wegzulassen und die Widerstände der Spannungsteileranordnung 24 bzw. der Eingangsbürdenanordnungen 48 derart auszulegen, dass die erste Referenzspannung dauerhaft unter den zweiten Referenzspannungen liegt.

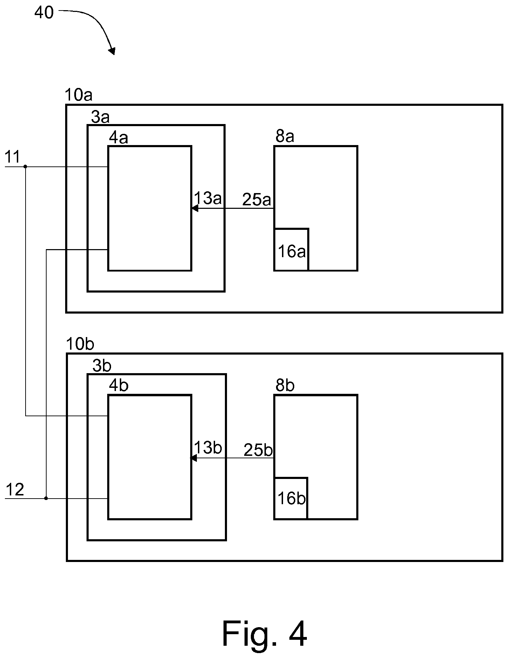

Die Figur 4 zeigt ein System 40 aus wenigstens einer ersten und einer zweiten Feldgerät-Koppeleinrichtung 10a und 10b. Die erste und zweite Feldgerät-Koppeleinrichtung sind dabei gemäß einer der vorstehend beschriebenen Feldgerät-Koppeleinrichtungen ausgebildet. Die nachstehend beschriebenen Komponenten der ersten und zweiten Feldgerät-Koppeleinrichtung 10a und 10b sind in gleicher Weise wie die vorstehend beschriebenen Komponenten gleichen Namens ausgebildet. Eine wiederholte Erläuterung dieser Komponenten wird an dieser Stelle vermieden. Die Stromschnittstellen 3a und 3b der beiden Feldgerät-Koppeleinrichtungen 10a und 10b sind parallel miteinander verbunden und teilen sich damit den ersten Leitungsanschluss 11 und den zweiten Leitungsanschluss 12. Die Schaltungsanordnung 8a wenigstens der ersten Feldgerät-Koppeleinrichtung 10a ist ausgebildet, zumindest während einer Bereitstellung des Kommunikationssignals 25a an der ersten Feldgerät-Koppeleinrichtung 10a eine erste Referenzspannung, die an einem ersten Referenzeingang 13a der ersten ansteuerbaren Eingangsbürde 4a der ersten Feldgerät-Koppeleinrichtung 10a anliegt, durch Betätigung eines Schalters 16a unter eine erste Referenzspannung zu setzten, die an einem Referenzeingang 13b der ersten ansteuerbaren Eingangsbürde 4b der zweiten Feldgerät-Koppeleinrichtung 10b anliegt. Alternativ oder zusätzlich dazu ist die Schaltungsanordnung 8b der zweiten Feldgerät-Koppeleinrichtung 10b ausgebildet, zumindest während einer Bereitstellung des Kommunikationssignals 25a an der ersten Feldgerät-Koppeleinrichtung 10a die erste Referenzspannung der zweiten Feldgerät-Koppeleinrichtung 10b durch Betätigung eines Schalters 16b über die erste Referenzspannung der ersten Feldgerät-Koppeleinrichtung 10b zu setzen.

Die beiden Feldgerät-Koppeleinrichtungen 10a und 10b können dabei in jeweiligen Feldgeräten 5 eingesetzt sein, die in der Figur 4 nicht gezeigt sind.

Gemäß der vierten Ausführungsform sind die beiden Feldgerät-Koppeleinrichtungen 10a und 10b bzw. deren Stromschnittstellen 3a und 3b parallel geschaltet und können somit mit einer einzigen Stromschnittstelle einer übergeordneten Steuereinrichtung verbunden und aus dieser gespeist werden. Dabei tritt jedoch das vorstehend bereits beschriebene Problem auf - nämlich dass bei der Parallelschaltung zweier Eingangsbürden jeweils die Eingangsbürde mit der niedrigeren Referenzspannung die über den Eingangsbürden abfallende Bürdenspannung bestimmt. Zur Lösung dieses Problems ist in dieser Ausgestaltung wenigstens die Schaltungsanordnung 8a ausgebildet, über die Betätigung des Schalters 16a die am ersten Referenzeingang 13a anliegende Referenzspannung nach unten zu ziehen, so dass sie unter der Referenzspannung der ersten ansteuerbaren Eingangsbürde 4b der zweiten Feldgerät-Koppeleinrichtung 10b liegt. Vorzugsweise sind beide Feldgerät-Koppeleinrichtungen mit einem entsprechenden Schalter 16a bzw. 16b ausgestattet, so dass selektiv entweder die Referenzspannung der ersten Feldgerät-Koppeleinrichtung 10a oder die der zweiten Feldgerät-Koppeleinrichtung 10b unter die Referenzspannung der jeweils anderen Feldgerät-Koppeleinrichtung 10a bzw. 10b gesetzt wird, so dass beide Feldgerät-Koppeleinrichtung 10a und 10b in die Lage versetzt werden können, über eine entsprechende Ansteuerung der jeweiligen ersten ansteuerbaren Eingangsbürde 4a bzw. 4b den Schnittstellenstrom 6 mit dem Stromsignal 9 in der vorstehend beschriebenen Weise zu überlagern.

Bei der Parallelschaltung mehrerer Feldgerät-Koppeleinrichtungen ist es vorteilhaft, den Pegel des Schnittstellenstroms auf einen festen Wert wie beispielsweise 20mA zu setzen, so dass jede der Feldgerät-Koppeleinrichtungen 10a, 10b bzw. jedes der zugehörigen Feldgeräte mit ausreichend Strom versorgt werden kann. Die Kommunikation findet dann ausschließlich über das Stromsignal 9 statt.

## Patentansprüche

1. Feldgerät-Koppeleinrichtung (10; 20; 30) zur Bereitstellung einer Versorgungsspannung (2) für ein Feldgerät (5) und zur Kommunikation mit einer übergeordneten Steuereinrichtung (1), wobei die Feldgerät-Koppeleinrichtung (10; 20; 30) eine Stromschnittstelle (3) umfasst, die zur Kommunikation mit der Steuereinrichtung (1) ausgebildet ist und die eine erste ansteuerbare Eingangsbürde (4) aufweist, die ausgebildet ist, aus einem Schnittstellenstrom (6) der Stromschnittstelle (3) eine der Versorgungsspannung (2) zugrunde liegende Bürdenspannung (7) bereitzustellen, wobei die Feldgerät-Koppeleinrichtung (10; 20; 30) ferner eine Schaltungsanordnung (8) zur Bereitstellung eines an die Steuereinrichtung zu übertragenden Kommunikationssignals (25) umfasst, **dadurch gekennzeichnet, dass** die Schaltungsanordnung (8) ausgebildet ist, die erste ansteuerbare Eingangsbürde (4) gemäß dem Kommunikationssignal (25) anzusteuern, um so den Schnittstellenstrom (6) mit einem dem Kommunikationssignal (25) entsprechenden Stromsignal (9) zu überlagern.

2. Feldgerät-Koppeleinrichtung (10; 20; 30) nach Anspruch 1, **dadurch gekennzeichnet, dass** die erste ansteuerbare Eingangsbürde (4) einen Spannungsregler, vorzugsweise einen Shunt-Spannungsregler, umfasst und die Schaltungsanordnung (8) ausgebildet ist, den Spannungsregler gemäß dem Kommunikationssignal anzusteuern.

3. Feldgerät-Koppeleinrichtung (10; 20; 30) nach Anspruch 1 oder 2, **dadurch gekennzeichnet, dass** die erste ansteuerbare Eingangsbürde (4) ausgebildet ist, die Bürdenspannung (7) auf oder unter einen eingestellten Spannungswert zu begrenzen.

4. Feldgerät-Koppeleinrichtung (10; 20; 30) nach einem der Ansprüche 1 bis 3, **dadurch gekennzeichnet, dass** die Stromschnittstelle (3) einen ersten und einen zweiten Leitungsanschluss (11, 12) aufweist und die erste ansteuerbare Eingangsbürde (4) seriell zwischen den beiden Leitungsanschlüssen (11, 12) geschaltet ist.

5. Feldgerät-Koppeleinrichtung (10; 20; 30) nach einem der voranstehenden Ansprüche, **dadurch gekennzeichnet, dass** die erste ansteuerbare Eingangsbürde (4) einen ersten Referenzeingang (13) aufweist und ausgebildet ist, die Bürdenspannung (7) gemäß einer Änderung der am ersten Referenzeingang (13) anliegenden Spannung zu ändern, und dass die Schaltungsanordnung (8) ausgebildet ist, dem ersten Referenzeingang (13) eine erste Referenzspannung zuzuführen und die erste Referenzspannung mit dem Kommunikationssignal (25) zu überlagern.

6. Feldgerät-Koppeleinrichtung (30) nach Anspruch 5, **dadurch gekennzeichnet, dass** parallel zu der ersten ansteuerbaren Eingangsbürde (4) mindestens eine zweite ansteuerbare Eingangsbürde (14) geschaltet ist, die einen zweiten Referenzeingang (15) aufweist, an dem eine zweite Referenzspannung anliegt, und dass die Referenzeingänge (13, 15) der ansteuerbaren Eingangsbürden (4, 14) derart beschaltet sind, dass die erste Referenzspannung dauerhaft unter der zweiten Referenzspannung liegt.

7. Feldgerät-Koppeleinrichtung (30) nach Anspruch 5, **dadurch gekennzeichnet, dass** parallel zu der ersten ansteuerbaren Eingangsbürde (4) mindestens eine zweite ansteuerbare Eingangsbürde (14) geschaltet ist, die einen zweiten Referenzeingang (15) aufweist, an dem eine zweite Referenzspannung anliegt, und dass die Schaltungsanordnung (8) ausgebildet ist, durch Betätigung eines Schalters (16) die erste Referenzspannung unter die zweite Referenzspannung zu setzen und/oder ausgebildet ist, durch Betätigung eines Schalters (16) die zweite Referenzspannung über die erste Referenzspannung zu setzten.

8. Feldgerät-Koppeleinrichtung (30) nach Anspruch 7, **dadurch gekennzeichnet, dass** die Schaltungsanordnung (8) einen Schaltungszweig (17) umfasst, der den Schalter (16) und vorzugsweise einen Widerstand (18) aufweist, wobei der Schaltungszweig (17) vorzugsweise zwischen einem Masseknoten (19) und dem ersten oder dem zweiten Referenzeingang (13, 15) geschaltet ist.

9. Feldgerät-Koppeleinrichtung (20; 30) nach einem der Ansprüche 5 bis 8, **dadurch gekennzeichnet, dass** die Schaltungsanordnung (8) eine Modemeinrichtung (21), die ausgebildet ist, das Kommunikationssignal an einem Ausgangsanschluss (22) bereitzustellen, sowie einen zwischen dem Ausgangsanschluss (22) und dem ersten Referenzeingang (13) geschalteten Kondensator (23) aufweist und ausgebildet ist, das an dem Ausgangsanschluss (22) bereitgestellte Kommunikationssignal über den Kondensator (23) in den ersten Referenzeingang (13) einzukoppeln.

10. Feldgerät-Koppeleinrichtung (20; 30) nach Anspruch 9, **dadurch gekennzeichnet, dass** zwischen dem Ausgangsanschluss (22) der Modemeinrichtung (21) und dem ersten Referenzeingang (13) eine Spannungsteileranordnung (24) vorgesehen ist, die ausgebildet ist, die Amplitude des die erste Referenzspannung zu überlagernden Kommunikationssignals um einen vorbestimmten Faktor zu skalieren.

11. Feldgerät-Koppeleinrichtung (20; 30) nach Anspruch 10, **dadurch gekennzeichnet, dass** die Spannungsteileranordnung (24) ferner dazu dient, die erste Referenzspannung bereitzustellen, wobei die Spannungsteileranordnung (24) vorzugsweise zwischen einem ersten Anschlusspunkt (26) der ersten ansteuerbaren Eingangsbürde (4) und einem Masseknoten (27) geschaltet ist.

12. Feldgerät-Koppeleinrichtung (10; 20; 30) nach einem der voranstehenden Ansprüche, **dadurch gekennzeichnet, dass** die Feldgerät-Koppeleinrichtung (10) ausgebildet ist, die Schaltungsanordnung (8) basierend auf der Bürdenspannung (7) und/oder der Versorgungsspannung (2) zu betreiben.

13. Feldgerät-Koppeleinrichtung (10; 20; 30) nach einem der voranstehenden Ansprüche, **dadurch gekennzeichnet, dass** die Stromschnittstelle (3) eine 4-20mA-Stromschnittstelle ist.

14. Feldgerät-Koppeleinrichtung (10; 20; 30) nach einem der voranstehenden Ansprüche, **dadurch gekennzeichnet, dass** die Feldgerät-Koppeleinrichtung (10) ausgebildet ist, mit der Steuereinrichtung über die Stromschnittstelle (3) gemäß dem HART-Protokoll zu kommunizieren, wobei vorzugsweise die Schaltungsanordnung ausgebildet ist, das Kommunikationssignal (25) derart bereitzustellen, dass das den Schnittstellenstrom überlagernde Stromsignal mit dem HART-Protokoll kompatibel ist.

15. System (40) aus wenigstens einer ersten und einer zweiten Feldgerät-Koppeleinrichtung (10a, 10b) nach einem der vorstehenden Ansprüche, **dadurch gekennzeichnet, dass** die Stromschnittstellen (3a, 3b) der beiden Feldgerät-Koppeleinrichtungen (10a, 10b) parallel miteinander verbunden sind und dass die Schaltungsanordnung (8a) wenigstens einer der Feldgerät-Koppeleinrichtungen (10a, 10b) ausgebildet ist, zumindest während einer Bereitstellung des Kommunikationssignals (25a) an der ersten Feldgerät-Koppeleinrichtung (10) eine erste Referenzspannung, die an einem Referenzeingang (13a) der ersten ansteuerbaren Eingangsbürde (4a) der ersten Feldgerät-Koppeleinrichtung (10a) anliegt, durch Betätigung eines Schalters (16a) unter eine erste Referenzspannung zu setzten, die an einem Referenzeingang (13b) der ersten ansteuerbaren Eingangsbürde (4b) der zweiten Feldgerät-Koppeleinrichtung (10b) anliegt, oder ausgebildet ist, zumindest während der Bereitstellung des Kommunikationssignals an der ersten Feldgerät-Koppeleinrichtung die erste Referenzspannung der zweiten Feldgerät-Koppeleinrichtung durch Betätigung eines Schalters über die erste Referenzspannung der ersten Feldgerät-Koppeleinrichtung zu setzen.

## Claims

1. Field-device coupling unit (10; 20; 30) for providing a supply voltage (2) for a field device (5) and for communication with a superordinate control unit (1), the field-device coupling unit (10; 20; 30) comprising a current interface (3), which is configured for communication with the control unit (1) and has a first controllable input load (4) which is configured to provide, from an interface current (6) of the current interface (3), a load voltage (7) on which the supply voltage (2) is based, the field-device coupling unit (10; 20; 30) further comprising a circuit arrangement (8) for providing a communication signal (25) which is to be transmitted to the control unit, **characterised in that** the circuit arrangement (8) is configured to control the first controllable input load (4) according to the communication signal (25) in order to superimpose the interface current (6) with a current signal (9) corresponding to the communication signal (25).

2. Field-device coupling unit (10; 20; 30) according to claim 1, **characterised in that** the first controllable input load (4) comprises a voltage regulator, preferably a shunt voltage regulator, and **in that** the circuit arrangement (8) is configured to control the voltage regulator according to the communication signal.

3. Field-device coupling unit (10; 20; 30) according to claim 1 or 2, **characterised in that** the first controllable input load (4) is configured to limit the load voltage (7) to or below a set voltage value.

4. Field-device coupling unit (10; 20; 30) according to any of claims 1 to 3, **characterised in that** the current interface (3) comprises a first and a second line connection (11, 12), and **in that** the first controllable input load (4) is connected in series between the two line connections (11, 12).

5. Field-device coupling unit (10; 20; 30) according to any of the preceding claims, **characterised in that** the first controllable input load (4) has a first reference input (13) and is configured to change the load voltage (7) according to a change in the voltage applied to the first reference input (13), and **in that** the circuit arrangement (8) is configured to supply a first reference voltage to the first reference input and to superimpose the first reference voltage with the communication signal (25).

6. Field-device coupling unit (30) according to claim 5, **characterised in that**, in parallel with the first controllable input load (4), at least one second controllable input load (14) is connected, which comprises a second reference input (15), to which a second reference voltage is applied, and **in that** the reference inputs (13, 15) of the controllable input loads (4, 14) are connected in such a way that the first reference voltage is permanently below the second reference voltage.

7. Field-device coupling unit (30) according to claim 5, **characterised in that**, in parallel with the first controllable input load (4), at least one second controllable input load (14) is connected, which comprises a second reference input (15), to which a second reference voltage is applied, and **in that** the circuit arrangement (8) is configured, by operating a switch (16), to set the first reference voltage to below the second reference voltage and/or is configured, by operating a switch (16), to set the second reference voltage to above the first reference voltage.

8. Field-device coupling unit (30) according to claim 7, **characterised in that** the circuit arrangement (8) comprises a first circuit branch (17) which has the switch (16) and preferably a resistor (18), the circuit branch (17) preferably being connected between a ground node (19) and the first or the second reference input (13, 15).

9. Field-device coupling unit (20; 30) according to any of claims 5 to 8, **characterised in that** the circuit arrangement (8) comprises a modem means (21) which is configured to provide the communication signal to an output terminal (22), and a capacitor (23) connected between the output terminal (22) and the first reference input (13), and is configured to couple the communication signal provided to the output terminal (22) into the first reference input (13) by means of the capacitor (23).

10. Field-device coupling unit (20; 30) according to claim 9, **characterised in that**, between the output terminal (22) of the modem means (21) and the first reference input (13), a voltage divider assembly (24) is provided, which is configured to scale the amplitude of the communication signal superimposing the first reference voltage by a predetermined factor.

11. Field-device coupling unit (20; 30) according to claim 10, **characterised in that** the voltage divider assembly (24) is further used to provide the first reference voltage, the voltage divider assembly (24) preferably being connected between a first connection point (26) of the first controllable input load (4) and a ground node (27).

12. Field-device coupling unit (10; 20; 30) according to any of the preceding claims, **characterised in that** the field-device coupling unit (10) is configured to operate the circuit arrangement (8) based on the load voltage (7) and/or the supply voltage (2).

13. Field-device coupling unit (10; 20; 30) according to any of the preceding claims, **characterised in that** the current interface (3) is a 4-20 mA current interface.

14. Field-device coupling unit (10; 20; 30) according to any of the preceding claims, **characterised in that** the field-device coupling unit (10) is configured to communicate with the control unit by means of the current interface (3) according to the HART protocol, the circuit arrangement preferably being configured to provide the communication signal (25) in such a way that the current signal superimposing the interface current is compatible with the HART protocol.

15. System (40) composed of at least a first and a second field-device coupling unit (10a, 10b) according to any of the preceding claims, **characterised in that** the current interfaces (3a, 3b) of the two field-device coupling units (10a, 10b) are connected in parallel to one another, and **in that** the circuit arrangement (8a) of at least one of the field-device coupling units (10a, 10b) is configured, at least whilst providing the communication signal (25a) to the first field-device coupling unit (10), to set a first reference voltage, which is applied to a reference input (13a) of the first controllable input load (4a) of the first field-device coupling unit (10a), by operating a switch (16a), to below a first reference voltage which is applied to a reference input (13b) of the first controllable input load (4b) of the second field-device coupling unit (10b), or is configured, at least whilst providing the communication signal to the first field-device coupling unit, to set the first reference voltage of the second field-device coupling unit, by operating a switch, to above the first reference voltage of the first field-device coupling unit.

## Revendications

1. Dispositif de couplage d'appareil de terrain (10 ; 20 ; 30) servant à fournir une tension d'alimentation (2) pour un appareil de terrain (5) et servant à la communication avec un dispositif de commande (1) d'ordre supérieur, dans lequel le dispositif de couplage d'appareil de terrain (10; 20; 30) comprend une interface de courant (3), qui est réalisée pour communiquer avec le dispositif de commande (1) et qui présente une première charge d'entrée (4) pouvant être pilotée, qui est réalisée pour fournir, à partir d'un courant d'interface (6) de l'interface de courant (3), une tension de charge (7) sur laquelle repose la tension d'alimentation (2), dans lequel le dispositif de couplage d'appareil de terrain (10 ; 20 ; 30) comprend en outre un ensemble de commutation (8) servant à fournir un signal de communication (25) à transmettre au dispositif de commande, **caractérisé en ce que** l'ensemble de commutation (8) est réalisé pour piloter la première charge d'entrée (4) pouvant être pilotée selon le signal de communication (25) afin de superposer ainsi le courant d'interface (6) à un signal de courant (9) correspondant au signal de communication (25).

2. Dispositif de couplage d'appareil de terrain (10; 20; 30) selon la revendication 1, **caractérisé en ce que** la première charge d'entrée (4) pouvant être pilotée comprend un régulateur de tension, de préférence un régulateur de tension shuntée, et l'ensemble de commutation (8) est réalisé pour piloter le régulateur de tension selon le signal de communication.

3. Dispositif de couplage d'appareil de terrain (10; 20 ; 30) selon la revendication 1 ou 2, **caractérisé en ce que** la première charge d'entrée (4) pouvant être pilotée est réalisée pour limiter la tension de charge (7) à ou sous une valeur de tension réglée.

4. Dispositif de couplage d'appareil de terrain (10 ; 20 ; 30) selon l'une quelconque des revendications 1 à 3, **caractérisé en ce que** l'interface de courant (3) présente un premier et un deuxième raccord de ligne (11, 12) et la première charge d'entrée (4) pouvant être pilotée est branchée en série entre les deux raccords de ligne (11, 12).

5. Dispositif de couplage d'appareil de terrain (10 ; 20 ; 30) selon l'une quelconque des revendications précédentes, **caractérisé en ce que** la première charge d'entrée (4) pouvant être pilotée présente une première entrée de référence (13) et est réalisée pour modifier la tension de charge (7) selon une modification de la tension appliquée sur la première entrée de référence (13), et que l'ensemble de commutation (8) est réalisé pour amener à la première entrée de référence (13) une première tension de référence et pour superposer la première tension de référence avec le signal de communication (25).

6. Dispositif de couplage d'appareil de terrain (30) selon la revendication 5, **caractérisé en ce qu'**est branchée en parallèle par rapport à la première charge d'entrée (4) pouvant être pilotée au moins une deuxième charge d'entrée (14) pouvant être pilotée, qui présente une deuxième entrée de référence (15), sur laquelle est appliquée une deuxième tension de référence, et que les entrées de référence (13, 15) des charges d'entrée (4, 14) pouvant être pilotées sont branchées de telle manière que la première tension de référence est durablement inférieure à la deuxième tension de référence.

7. Dispositif de couplage d'appareil de terrain (30) selon la revendication 5, **caractérisé en ce qu'**est branchée de manière parallèle à la première charge d'entrée (4) pouvant être pilotée au moins une deuxième charge d'entrée (14) pouvant être pilotée, qui présente une deuxième entrée de référence (15), sur laquelle est appliquée une deuxième tension de référence, et que l'ensemble de commutation (8) est réalisé pour amener, du fait de l'actionnement d'un commutateur (16), la première tension de référence sous la deuxième tension de référence et/ou est réalisé pour amener, du fait de l'actionnement d'un commutateur (16), la deuxième tension de référence au-dessus de la première tension de référence.

8. Dispositif de couplage d'appareil de terrain (30) selon la revendication 7, **caractérisé en ce que** l'ensemble de commutation (8) comprend une branche de commutation (17), qui présente le commutateur (16) et de préférence une résistance (18), dans lequel la branche de commutation (17) est branchée de préférence entre un noeud de masse (19) et la première ou la deuxième entrée de référence (13, 15).

9. Dispositif de couplage d'appareil de terrain (20 ; 30) selon l'une quelconque des revendications 5 à 8, **caractérisé en ce que** l'ensemble de commutation (8) présente un dispositif modem (21), qui est réalisé pour fournir le signal de communication à une borne de sortie (22), ainsi qu'un condensateur (23) branché entre la borne de sortie (22) et la première entrée de référence (13) et est réalisé pour injecter le signal de communication fourni sur la borne de sortie (22) dans la première entrée de référence (13) par l'intermédiaire du condensateur (23).

10. Dispositif de couplage d'appareil de terrain (20; 30) selon la revendication 9, **caractérisé en ce qu'**est prévu, entre la borne de sortie (22) du dispositif modem (21) et la première entrée de référence (13), un ensemble de répartition de tension (24), qui est réalisé pour mettre à l'échelle l'amplitude du signal de communication devant se superposer avec la première tension de référence d'un facteur prédéfini.

11. Dispositif de couplage d'appareil de terrain (20 ; 30) selon la revendication 10, **caractérisé en ce que** l'ensemble de répartition de tension (24) sert en outre à fournir la première tension de référence, dans lequel l'ensemble de répartition de tension (24) est branché de préférence entre un premier point de raccordement (26) de la première charge d'entrée (4) pouvant être pilotée et un noeud de masse (27).

12. Dispositif de couplage d'appareil de terrain (10 ; 20 ; 30) selon l'une quelconque des revendications précédentes, **caractérisé en ce que** le dispositif de couplage d'appareil de terrain (10) est réalisé pour faire fonctionner l'ensemble de commutation (8) sur la base de la tension de charge (7) et/ou de la tension d'alimentation (2).

13. Dispositif de couplage d'appareil de terrain (10 ; 20 ; 30) selon l'une quelconque des revendications précédentes, **caractérisé en ce que** l'interface de courant (3) est une interface de courant 4 - 20 mA.

14. Dispositif de couplage d'appareil de terrain (10 ; 20 ; 30) selon l'une quelconque des revendications précédentes, **caractérisé en ce que** le dispositif de couplage d'appareil de terrain (10) est réalisé pour communiquer avec le dispositif de commande par l'intermédiaire de l'interface de courant (3) selon le protocole HART, dans lequel de préférence l'ensemble de commutation est réalisé pour fournir le signal de communication (25) de telle manière que le signal de courant se superposant avec le courant d'interface est compatible avec le protocole HART.

15. Système (40) comprenant au moins un premier et un deuxième dispositif de couplage d'appareil de terrain (10a, 10b) selon l'une quelconque des revendications précédentes, **caractérisé en ce que** les interfaces de courant (3a, 3b) des deux dispositifs de couplage d'appareil de terrain (10a, 10b) sont reliées entre elles de manière parallèle, et que l'ensemble de commutation (8a) d'au moins un des dispositifs de couplage d'appareil de terrain (10a, 10b) est réalisé pour amener, au moins alors que le signal de communication (25a) est fourni au premier dispositif de couplage d'appareil de terrain (10), une première tension de référence, qui est appliquée sur une entrée de référence (13a) de la première charge d'entrée (4a) pouvant être pilotée du premier dispositif de couplage d'appareil de terrain (10a), du fait de l'actionnement d'un commutateur (16a), sous une première tension de référence, qui est appliquée sur une entrée de référence (13b) de la première charge d'entrée (4b) pouvant être pilotée du deuxième dispositif de couplage d'appareil de terrain (10b), ou est réalisé pour amener, au moins quand le signal de communication est fourni au premier dispositif de couplage d'appareil de terrain, la première tension de référence du deuxième dispositif de couplage d'appareil de terrain, du fait de l'actionnement d'un commutateur, au-dessus de la première tension de référence du premier dispositif de couplage d'appareil de terrain.
